# EUROPEAN PATENT APPLICATION

(11) **EP 4 184 395 A1**
(43) Date of publication of application: **24.05.2023**
(21) Application number: 22200822.9
(22) Date of filing: 11.10.2022
(51) Int. Cl.: G06N 5/02, G06N 20/00

(54) **RECOMMENDATIONS USING GRAPH MACHINE LEARNING-BASED REGRESSION**

(30) Priority: 18.11.2021 US 202117455516
(71) Applicant: Fujitsu Limited, Kawasaki-shi, Kanagawa 211-8588 (JP)
(72) Inventor: Au, Wing, Sunnyvale, CA 94085 (US); Uchino, Kanji, Sunnyvale, CA 94085 (US)
(74) Representative: Hoffmann Eitle

(57) **Abstract**

In an embodiment, each of a set of subgraphs associating an entity from an entity graph with an item is extracted from a graph database. A label score, which is an importance of an item to a respective entity is computed for each subgraph. A training dataset including the set of subgraphs and the label score for each subgraph is generated. A set of ML regression models is trained on respective entity-specific subsets of the training dataset. An ML regression model associated with a second entity generates a prediction score for an unseen graph. From the set of subgraphs, one or more subgraphs associated with the second entity are determined based on the prediction score. A recommendation for one or more items is determined, based on the one or more subgraphs. The recommendation is displayed on a user device of the first entity.

## Description

### FIELD

The embodiments discussed in the present disclosure are related to recommendations using graph machine learning-based regression.

### BACKGROUND

Advancements in the field of knowledge representation and reasoning have led to development of numerous graph-based recommendations. One of the common types of graph is a knowledge graph that represents objects, entities, events, situations, and associated interdependencies in the form of a graph-structured data model. The knowledge graph typically includes nodes and edges connecting the nodes. Every edge represents a relationship between two connecting nodes. Many recommender systems use a knowledge graph to provide recommendations to users based on a similarity between information represented by various types of nodes, and their connections and relations.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

According to an aspect of an embodiment, a method may include a set of operations which may include querying a graph database to extract a set of subgraphs, each of which may include information associating a respective entity of an entity group with an item. The set of operations may further include computing a label score for each subgraph of the set of subgraphs. The label score may be indicative of an importance of the item to the respective entity. The set of operations may further include generating a training dataset to include the set of subgraphs and the label score for each subgraph of the set of subgraphs. The set of operations may further include training a set of machine learning (ML) regression models on respective entity-specific subsets of the training dataset and providing an unseen subgraph associated with a first entity as an input to an ML regression model of the trained set of ML regression models. The trained ML regression model may be associated with a second entity that may be different from the first entity. The set of operations may further include generating a prediction score as an output of the ML regression model for the input and determining, from the set of subgraphs, one or more subgraphs associated with the second entity. The one or more subgraphs may be determined based on the prediction score. The set of operations may further include determining a recommendation for one or more items, based on the one or more subgraphs and controlling a user device associated with the first entity to display the recommendation.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

### BRIEF DESCRIPTION OF THE DRAWINGS

Example embodiments will be described and explained with additional specificity and detail through the use of the accompanying drawings in which:
FIG. 1 is a diagram representing an example environment related to recommendations using graph machine learning-based regression;
FIG. 2 is a block diagram that illustrates an exemplary system for recommendations using graph machine learning-based regression;
FIG. 3 is a diagram that illustrates an exemplary scenario of an extraction of a subgraph associated with an entity and an item related to the entity from a graph database including an example graph;
FIG. 4 is a diagram that illustrates a flowchart of an example method for extraction of a set of subgraphs from a graph database;
FIG. 5 is a diagram that illustrates an exemplary graph in which each entity corresponds to a researcher and each item corresponds to a research journal associated with a respective researcher;
FIG. 6 is a diagram that illustrates exemplary operations for extraction of a set of subgraphs from a graph database;
FIG. 7 is a diagram that illustrates a flowchart of an example method for determination of recommendations using graph machine learning-based regression;
FIG. 8 is a diagram that illustrates a block diagram of an example method for determination of recommendations using graph machine learning-based regression;
FIG. 9 is a diagram that illustrates a flowchart of an example method for determination of a third score associated with a first subgraph from a set of subgraphs extracted from a graph database;
FIG. 10 is a diagram that illustrates a flowchart of an example method for determination of a fourth score associated with a first subgraph from a set of subgraphs extracted from a graph database;
FIG. 11 is a diagram that illustrates a flowchart of an example method for determination of a set of adjusted scores associated with a set of subgraphs extracted from a graph database;
FIG. 12 is a diagram that illustrates a flowchart of an example method for determination of a third score for an item associated with a first subgraph from a set of subgraphs extracted from a graph database; and
FIG. 13 is a diagram that illustrates a block diagram of an example scenario for determination of recommendations associated with an entity of an unseen graph by using graph machine learning-based regression,
all according to at least one embodiment described in the present disclosure.

### DESCRIPTION OF EMBODIMENTS

Some embodiments described in the present disclosure relate to methods and systems for recommendations using graph machine learning-based regression. In the present disclosure, a graph database may be queried to extract a set of subgraphs. Each of the extracted set of subgraphs may include information associating a respective entity of an entity group with an item. Further, a label score may be computed for each subgraph of the set of subgraphs. The label score may be indicative of an importance of the item to the respective entity. Thereafter, a training dataset may be generated to include the set of subgraphs and the label score for each subgraph. A set of machine learning (ML) regression models may be trained on respective entity-specific subsets of the training dataset. Thereafter, an unseen subgraph associated with a first entity may be provided as an input to an ML regression model of the trained set of ML regression models. The trained ML regression model may be associated with a second entity, which may be different from the first entity. Thereafter, a prediction score may be generated as an output of the ML regression model for the input. Further, from the set of subgraphs, one or more subgraphs associated with the second entity may be determined, based on the prediction score. A recommendation for one or more items may be determined, based on the one or more subgraphs. Further, a user device associated with the first entity may be controlled to display the recommendation.

According to one or more embodiments of the present disclosure, the technological field of knowledge representation and reasoning may be improved by configuring a computing system in a manner that the computing system may be able to determine recommendations using graph machine learning-based regression. The computing system may train a set of ML regression models on the respective entity-specific subsets of the training dataset including the set of subgraphs and the label score for each subgraph extracted from the graph database. On an input of an unseen subgraph associated with the first entity to the ML regression model associated with the second entity, a prediction score may be generated. The generated prediction score may be used to determine one or more subgraphs associated with the second entity from the set of subgraphs. Finally, a recommendation for one or more items may be determined, based on the one or more subgraphs.

The purpose of the recommendation is to suggest to user specific items, based on analysis of the data connecting the multiplicity of many users to many items of similar kind. The data connecting the users to the items are represented as a knowledge graph, where nodes in the graph may represent the entities of object, situations, or concepts, and edges in the graph may represent relationships between the entities. In one embodiment, the example in this disclosure refers to recommending university researcher (users) to academic research publications (journals), but the same recommendation task is equally applicable to different endpoint items like customers, restaurants, products, and the like.

In contrast to conventional systems, the disclosed system (i.e., a subgraph based learning system) may capture full subgraph linkage information of intermediate nodes, which may be lie between nodes representative of entities and nodes representative of items. The disclosed system may use such subgraph linkage information for recommendation of the one or more items associated with an input unseen graph. Further, the disclosed subgraph-based learning system may incorporate more information into the recommendation generation process than conventional node-based learning systems. For example, implicit or latent relations and patterns in the subgraph linkage information may be learned by the disclosed subgraph-based learning system. The conventional systems, on the other hand, may use a priori knowledge of the graph data or other heuristics of the graph data structure that may be insufficient, biased or, inaccurate. Further, the disclosed system may provide a better performance and may be more scalable than traditional graph-based solutions (such as typical content-based or collaborative-filtering recommendation systems), as the disclosed system may avoid inefficiencies related to global update of similarity scores into the graph database, which may be required in the traditional solutions.

Embodiments of the present disclosure are explained with reference to the accompanying drawings.

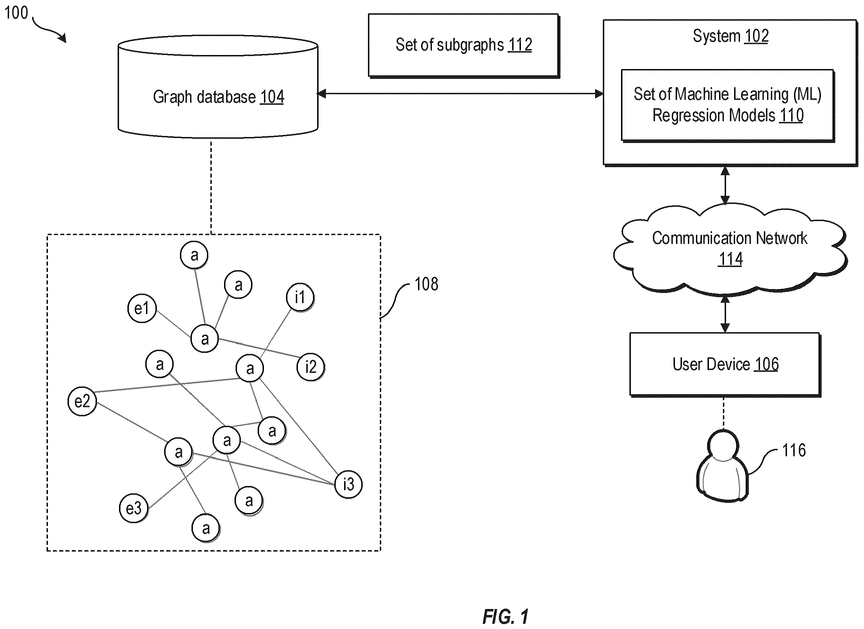

FIG. 1 is a diagram representing an example environment related to recommendations using graph machine learning-based regression, arranged in accordance with at least one embodiment described in the present disclosure. With reference to FIG. 1, there is shown an environment 100. The environment 100 may include a system 102, a graph database 104, a user device 106, and a communication network 114. The system 102 and the user device 106 may be communicatively coupled to each other, via the communication network 114. Further, the system 102 may be associated with the graph database 104. The graph database 104 may store a knowledge graph, such as a graph 108. The system 102 may host a set of machine learning (ML) regression models 110. In FIG. 1, there is shown a user 116 who may be associated with the system 102 or the user device 106. There is further shown a set of subgraphs 112 that may be extracted from the graph database 104 (for example, from the graph 108 stored on the graph database 104) and communicated to the system 102.

The system 102 may include suitable logic, circuitry, interfaces, and/or code that may be configured to determine recommendations for users using graph machine learning-based regression, as described herein.

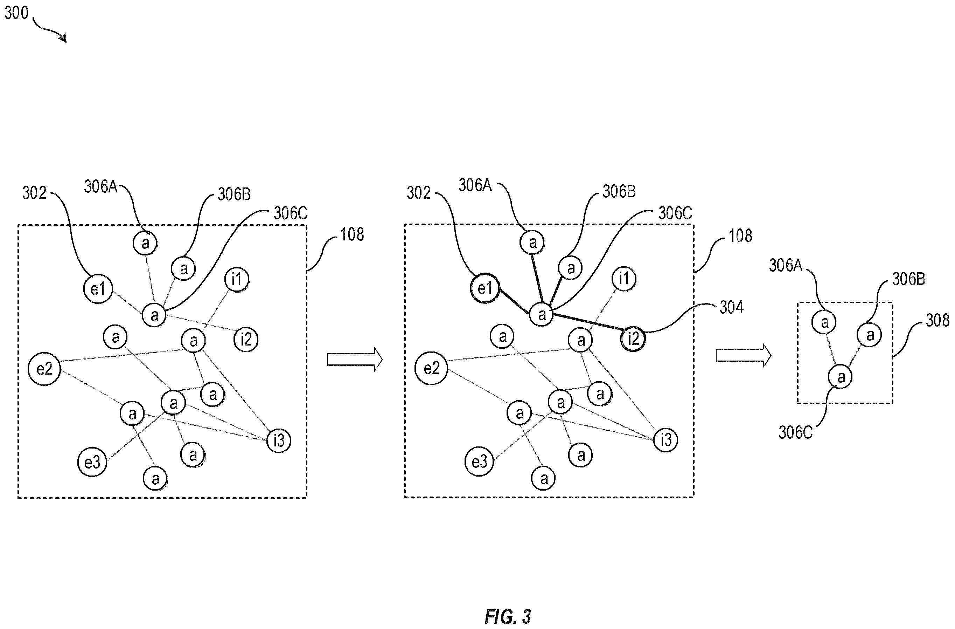

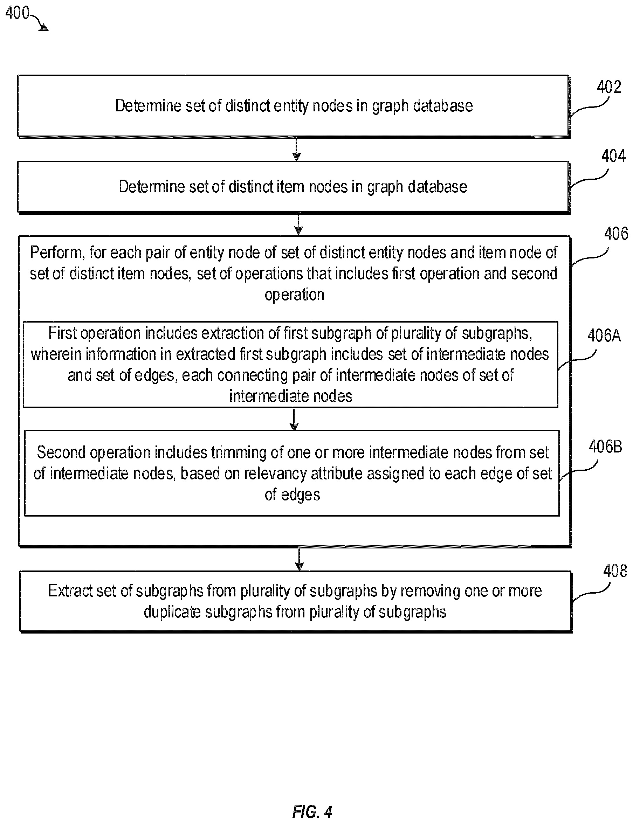

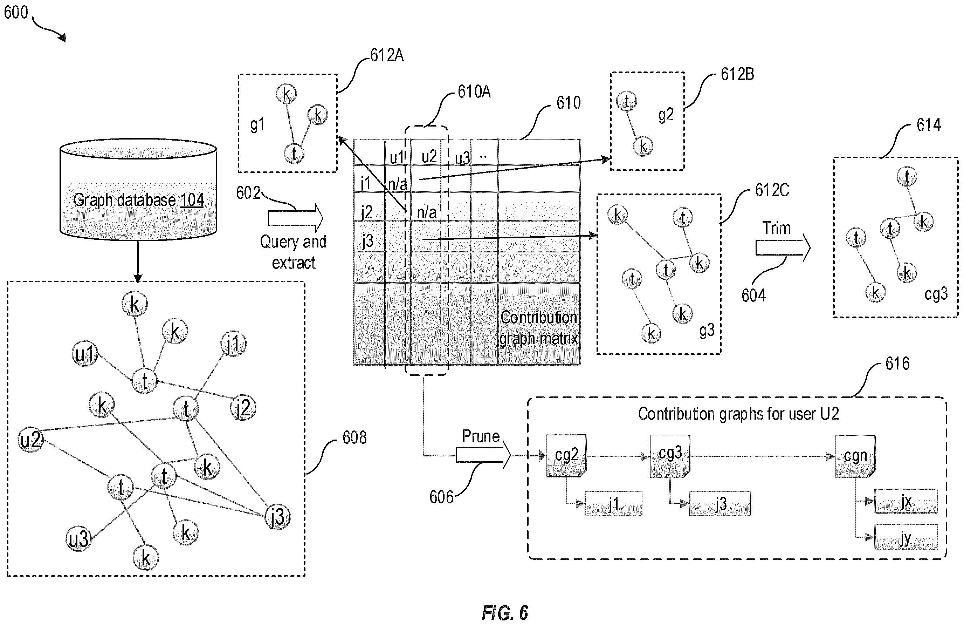

The system 102 may be configured to query the graph database 104 to extract the set of subgraphs 112. Each subgraph of the extracted set of subgraphs 112 may include information associating a respective entity of an entity group with an item. The entity may correspond to one of a user, a group of users who works together to achieve a common objective, or an organization. For example, the disclosure (described herein) may be applicable for generation of research journal recommendations. For such a recommendation, an entity-item pair associated with a subgraph may be a researcher and a research journal associated with the researcher. The disclosure may be applicable to various other domains, such as, but not limited to, patent search, retail product search, social networking, and other commercial applications. For example, the disclosure may be applicable for patent prior art search between authors and patents, which may represent entity-item pairs associated with a subgraph. In case of retail product search, the disclosure may be applicable for product recommendations to customers or other users. Such users (and customers) and products can be represented through entity-item pairs associated with a subgraph. In case of social networking, the disclosure may be applicable to new friend recommendations to users. For such a recommendation, a user and a social connection of the user may correspond to an entity-item pair associated with a subgraph. Further, the disclosure may be used in commercial applications for sales lead generations. In such a case, a salesperson and a customer may be an entity-item pair associated with a subgraph. An example of a subgraph extracted from the graph database 104 is provided in FIG. 3. The extraction of the set of subgraphs 112 from the graph database 104 is described further, for example, in FIGs. 4 and 6.

The system 102 may be configured to compute a label score for each subgraph of the set of subgraphs 112. The label score may be indicative of an importance of the item to the respective entity. After computing the label score, the system 102 may be configured to generate a training dataset to include the set of subgraphs 112 and the label score for each subgraph of the set of subgraphs 112. The system 102 may be further configured to train the set of ML regression models 110 on respective entity-specific subsets of the training dataset. Each ML regression models of the set of ML regression models 110 may be a graph ML model. Each ML regression model may be trained to output a prediction score for a subgraph input to the ML regression model. The predication score may be used to recommend items associated with the input subgraph.

Once trained, the system 102 may be configured to provide an unseen subgraph associated with a first entity as an input to an ML regression model of the trained set of ML regression models 110. The trained ML regression model may be associated with a second entity that may be different from the first entity. The system 102 may be further configured to generate a prediction score as an output of the ML regression model for the input. The prediction score may be indicative of an importance of items associated with the second entity for the first entity.

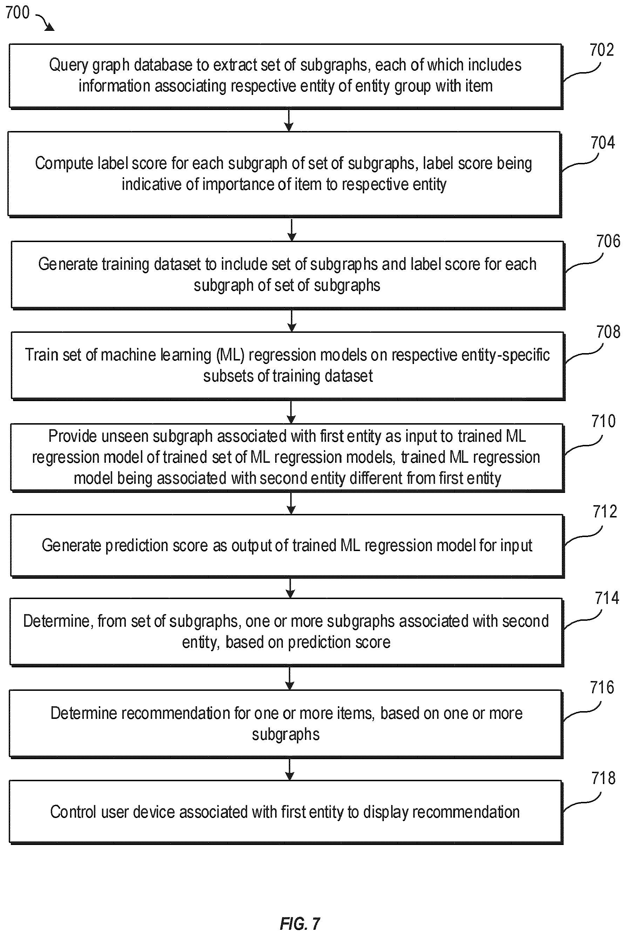

The system 102 may be configured to determine, from the set of subgraphs 112, one or more subgraphs associated with the second entity, based on the prediction score. Thereafter, the system 102 may determine a recommendation for one or more items, based on the one or more subgraphs. The one or more items in the recommendation may be determined based on an association of the one or more items with the one or more subgraphs. The recommendation may be for items that may be relevant for the first entity. Each subgraph of the determined one or more subgraphs associated with the second entity may be associated with certain items. The prediction score associated with the unseen subgraph may be output from the ML regression model associated with the second entity. As the one or more subgraphs associated with the second entity may be determined based on the prediction score (for the unseen graph), items associated with such subgraphs may be of relevance to the first entity. Such items may therefore be recommended to the first entity (or a user associated with the first entity). The system 102 may be configured to control a user device (e.g., the user device 106) associated with the first entity (e.g., the user 116) to display the recommendation. The determination of the recommendation is described further, for example, in FIGs. 7, 8, and 13.

In an embodiment, the work of subgraph extraction, label score computation, ML training, and prediction may be performed on different machines, especially since all graph-related operations can be largely memory intensive and the ML work can be GPU intensive. All such machines may be considered as part of the system 102. In another embodiment, the system 102 may include two different machines that have a shared storage for intermediate data.

Examples of the system 102 may include, but are not limited to, a recruitment engine or machine, a mobile device, a desktop computer, a laptop, a computer work-station, a computing device, a mainframe machine, a server such as a cloud server, and a group of servers. In one or more embodiments, the system 102 may include a user-end terminal device and a server communicatively coupled to the user-end terminal device. The system 102 may be implemented using hardware including a processor, a microprocessor (e.g., to perform or control performance of one or more operations), a field-programmable gate array (FPGA), or an application-specific integrated circuit (ASIC). In some other instances, the system 102 may be implemented using a combination of hardware and software.

The graph database 104 may include suitable logic, interfaces, and/or code that may be configured to store the graph 108. The graph database 104 may be derived from data off a relational or non-relational database, or a set of comma-separated values (csv) files in conventional or big-data storage. The graph database 104 may be stored or cached on a device, such as a server or the system 102. The device storing the graph database 104 may be configured to receive a query for the set of subgraphs 112 from the system 102. In response, the server of the graph database 104 may be configured to retrieve and provide the queried set of subgraphs 112 to the system 102 based on the received query.

In some embodiments, the graph database 104 may be hosted on a plurality of servers stored at same or different locations. The operations of the graph database 104 may be executed using hardware including a processor, a microprocessor (e.g., to perform or control performance of one or more operations), a field-programmable gate array (FPGA), or an application-specific integrated circuit (ASIC). In some other instances, the graph database 104 may be implemented using software.

The user device 106 may include suitable logic, circuitry, interfaces, and/or code that may be configured to execute a data mining task for creation of the graph 108. For example, the user device 106 may include a web-client software or an electronic mail software, through which the user device 106 may receive data associated with a set of entities and a set of items (related to each entity of the set of entities). The user device 106 may include data mining software that may be used to create the graph 108 based on application of data mining operations on the received data. The user device 106 may upload the created graph 108 to the system 102. In addition, the user device 106 may upload the created graph 108 to the graph database 104 for storage.

The user device 106 may be further configured to receive the recommendation for the one or more items. The user device 106 may display the received recommendation for the one or more items on a display screen of the user device 106 for the user 116. In some embodiments, the user device 106 may receive a query from the user 116 to determine the recommendation for the one or more items. The user device 106 may further send the query to the system 102 and initiate the determination of the recommendation by the system 102. Examples of the user device 106 may include, but are not limited to, a mobile device, a desktop computer, a laptop, a computer work-station, a computing device, a mainframe machine, a server, such as a cloud server, and a group of servers. Although in FIG. 1, the user device 106 is separated from the system 102; however, in some embodiments, the user device 106 may be integrated in the system 102, without a deviation from the scope of the disclosure.

The set of ML regression models 110 may be a set of regression models, each of which may be trained to identify a relationship between inputs, such as features in a training dataset and to predict scores that indicate importance of items associated with one entity for the other entity. In an embodiment, each ML regression model of the set of ML regression models 110 may be a graph ML model. Herein, the training dataset may include the set of subgraphs 112 and the label score for each subgraph of the set of subgraphs 112. Each of the set of ML regression models 110 may be trained on a respective entity-specific subsets of the training dataset. Further, each of the set of ML regression models 110 may be defined by topology and hyper-parameters of the respective ML regression model, for example, number of weights, cost function, input size, number of layers, and the like. The parameters of the ML model, for example, weights, may be updated so as to move towards a global minima of a cost function for the ML model. After several epochs of the training on the feature information in the training dataset, the ML model may be deployed to output a prediction score for a set of inputs (e.g., a subgraph). The prediction score for an input subgraph may be indicative of an importance of items associated with an entity that corresponds to the input subgraph.

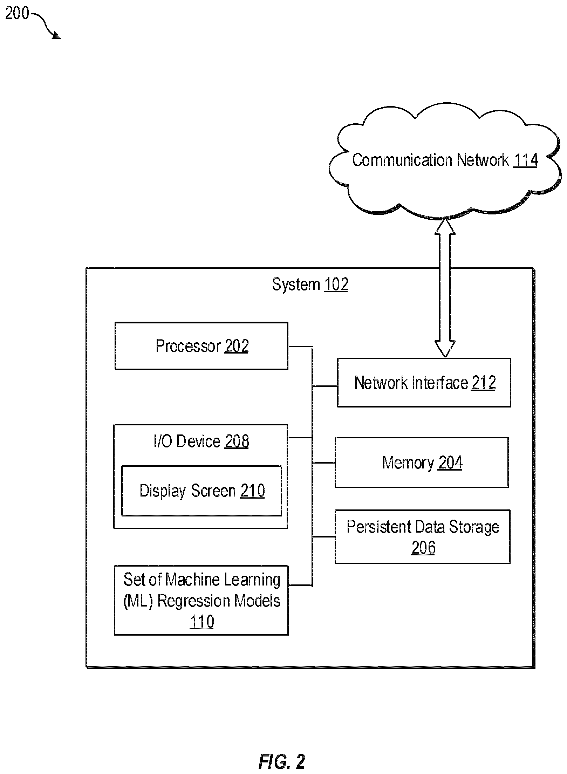

The ML model may include electronic data, which may be implemented as, for example, a software component of an application executable on the system 102. The ML model may rely on libraries, external scripts, or other logic/instructions for execution by a processor (such as, a processor 202 of FIG. 2). The ML model may include code and routines configured to enable the system 102 to perform one or more operations, such as, determine a predication score associated with an input unseen subgraph associated with an entity. Additionally, or alternatively, the ML model may be implemented using hardware including a processor, a microprocessor (e.g., to perform or control performance of one or more operations), a field-programmable gate array (FPGA), or an application-specific integrated circuit (ASIC). Alternatively, in some embodiments, the ML model may be implemented using a combination of hardware and software.

The communication network 114 may include a communication medium through which the system 102 may communicate with the user device 106. Though not shown in FIG. 1, in certain embodiment, the system 102 may also communicate with the servers of the graph database 104, via the communication network 114. Examples of the communication network 114 may include, but are not limited to, the Internet, a cloud network, a Wireless Fidelity (Wi-Fi) network, a Personal Area Network (PAN), a Local Area Network (LAN), and/or a Metropolitan Area Network (MAN). Various devices in the environment 100 may be configured to connect to the communication network 114, in accordance with various wired and wireless communication protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), ZigBee, EDGE, IEEE 802.11, light fidelity(Li-Fi), 802.16, IEEE 802.11s, IEEE 802.11g, multi-hop communication, wireless access point (AP), device to device communication, cellular communication protocols, and/or Bluetooth (BT) communication protocols, or a combination thereof.

Modifications, additions, or omissions may be made to FIG. 1 without departing from the scope of the present disclosure. For example, the environment 100 may include more or fewer elements than those illustrated and described in the present disclosure. For instance, in some embodiments, the environment 100 may include the system 102 but not the graph database 104 and the user device 106. In addition, in some embodiments, the functionality of each of the graph database 104 and the user device 106 may be incorporated into the system 102, without a deviation from the scope of the disclosure.

FIG. 2 is a block diagram of a system for generating recommendations using graph machine learning-based regression, arranged in accordance with at least one embodiment described in the present disclosure. FIG. 2 is explained in conjunction with elements from FIG. 1. With reference to FIG. 2, there is shown a block diagram 200 of a system 102. The system 102 may include a processor 202, a memory 204, a persistent data storage 206, an input/output (I/O) device 208, a display screen 210, a network interface 212, and the set of ML regression models 110.

The processor 202 may include suitable logic, circuitry, and/or interfaces that may be configured to execute program instructions associated with different operations to be executed by the system 102. For example, some of the operations may include querying the graph database 104, computing the label score, generating the training dataset, training the set of ML regression models 110, providing the unseen subgraph, generating the prediction score, determining the one or more subgraphs, determining the recommendation, and controlling the user device (e.g., the user device 106). The processor 202 may include any suitable special-purpose or general-purpose computer, computing entity, or processing device including various computer hardware or software modules and may be configured to execute instructions stored on any applicable computer-readable storage media. For example, the processor 202 may include one or more of a microprocessor, a graphical processing unit (GPU), a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in FIG. 2, the processor 202 may include any number of processors configured to, individually or collectively, perform or direct performance of any number of operations of the system 102, as described in the present disclosure. Additionally, one or more of the processors may be present on one or more different electronic devices, such as different servers. In some embodiments, the processor 202 may be configured to interpret and/or execute program instructions and/or process data stored in the memory 204 and/or the persistent data storage 206. In some embodiments, the processor 202 may fetch program instructions from the persistent data storage 206 and load the program instructions in the memory 204. After the program instructions are loaded into the memory 204, the processor 202 may execute the program instructions. Some of the examples of the processor 202 may be a Graphics Processing Unit (GPU), a Central Processing Unit (CPU), a Reduced Instruction Set Computer (RISC) processor, an ASIC processor, a Complex Instruction Set Computer (CISC) processor, a co-processor, and/or a combination thereof.

The memory 204 may include suitable logic, circuitry, interfaces, and/or code that may be configured to store program instructions executable by the processor 202. In certain embodiments, the memory 204 may be configured to store operating systems and associated application-specific information. The memory 204 may include computer-readable storage media for carrying or having computer-executable instructions or data structures stored thereon. Such computer-readable storage media may include any available media that may be accessed by a general-purpose or special-purpose computer, such as the processor 202. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 202 to perform a certain operation or group of operations associated with the system 102.

The persistent data storage 206 may include suitable logic, circuitry, interfaces, and/or code that may be configured to store program instructions executable by the processor 202, operating systems, and/or application-specific information, such as logs and application-specific databases. The persistent data storage 206 may include computer-readable storage media for carrying or having computer-executable instructions or data structures stored thereon. Such computer-readable storage media may include any available media that may be accessed by a general-purpose or a special-purpose computer, such as the processor 202.

By way of example, and not limitation, such computer-readable storage media may include tangible or non-transitory computer-readable storage media including Compact Disc Read-Only Memory (CD-ROM) or other optical disk storage, magnetic disk storage or other magnetic storage devices (e.g., Hard-Disk Drive (HDD)), flash memory devices (e.g., Solid State Drive (SSD), Secure Digital (SD) card, other solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 202 to perform a certain operation or group of operations associated with the system 102.

In some embodiments, either of the memory 204, the persistent data storage 206, or combination may store the set of subgraphs 112 extracted and received from the queried graph database 104, the computed label score, the generated training dataset, and the determined recommendation for the one or more items. Either of the memory 204, the persistent data storage 206, or combination may further store the set of ML regression models 110.

The I/O device 208 may include suitable logic, circuitry, interfaces, and/or code that may be configured to receive a user input. For example, the I/O device 208 may receive a user input to receive the graph 108 from a website or email software. In another example, the I/O device 208 may receive a user input to generate or edit the graph 108, and/or store the generated/edited graph 108 on the system 102 and/or the graph database 104. The I/O device 208 may further receive a user input that may include an instruction to determine the recommendation based on an input of an unseen subgraph. The I/O device 208 may be further configured to provide an output in response to the user input. For example, the I/O device 208 may display the recommendations of the one or more items (as may be determined by the system 102) on the display screen 210. The I/O device 208 may include various input and output devices, which may be configured to communicate with the processor 202 and other components, such as the network interface 212. Examples of the input devices may include, but are not limited to, a touch screen, a keyboard, a mouse, a joystick, and/or a microphone. Examples of the output devices may include, but are not limited to, a display (e.g., the display screen 210) and a speaker.

The display screen 210 may comprise suitable logic, circuitry, interfaces, and/or code that may be configured to display the recommendations of the one or more items based on an input unseen subgraph associated with the first entity. The display screen 210 may be configured to receive the user input from the user 116. In such cases the display screen 210 may be a touch screen to receive the user input. The display screen 210 may be realized through several known technologies such as, but not limited to, a Liquid Crystal Display (LCD) display, a Light Emitting Diode (LED) display, a plasma display, and/or an Organic LED (OLED) display technology, and/or other display technologies.

The network interface 212 may comprise suitable logic, circuitry, interfaces, and/or code that may be configured to establish a communication between the system 102, the graph database 104, and the user device 106, via the communication network 114, or directly. The network interface 212 may be implemented by use of various known technologies to support wired or wireless communication of the system 102, via the communication network 114. The network interface 212 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, and/or a local buffer.

Modifications, additions, or omissions may be made to the example system 102 without departing from the scope of the present disclosure. For example, in some embodiments, the example system 102 may include any number of other components that may not be explicitly illustrated or described for the sake of brevity.

FIG. 3 is a diagram that illustrates an exemplary scenario of extracting a subgraph associated with an entity and an item related to the entity from a graph database, in accordance with an embodiment of the disclosure. FIG. 3 is described in conjunction with elements from FIG. 1 and FIG. 2. With reference to FIG. 3, there is shown an exemplary scenario 300. The scenario 300 includes a graph (such as the graph 108) stored in the graph database 104. The graph stored in the graph database 104 may be a knowledge graph. The knowledge graph (e.g., the graph 108) may include a set of distinct entity nodes associated with the entity group and a set of distinct item nodes corresponding to a set of items. For example, as shown in FIG. 3, the graph 108 may include a first entity node 302 associated with an entity "e1". The graph 108 may further include a first item node 304 associated with an item "i2".

The knowledge graph (e.g., the graph 108) may further include the set of subgraphs 112, each of which may lie between at least one entity node of the set of distinct entity nodes and at least one item node of the set of distinct item nodes. The information in each subgraph of the set of subgraphs 112 may include a set of intermediate nodes connected to an entity node and an item node through a set of edges. Each intermediate node of the set of intermediate nodes may represent an attribute that may be linked to the item. For example, as shown in FIG. 3, the graph 108 may include a first subgraph 308 that may lie between the first entity node 302 (associated with the entity "e1") and the first item node 304 (associated with the item "i2"). The first subgraph 308 may include a first set of intermediate nodes including a first node 306A, a second node 306B, and a third node 306C. Each of the first set of intermediate nodes may represent an attribute that may be linked to the item "i2" associated with the first item node 304. The extraction of the set of subgraphs 112 from the graph database 104 is described further, for example, in FIGs. 4 and 6.

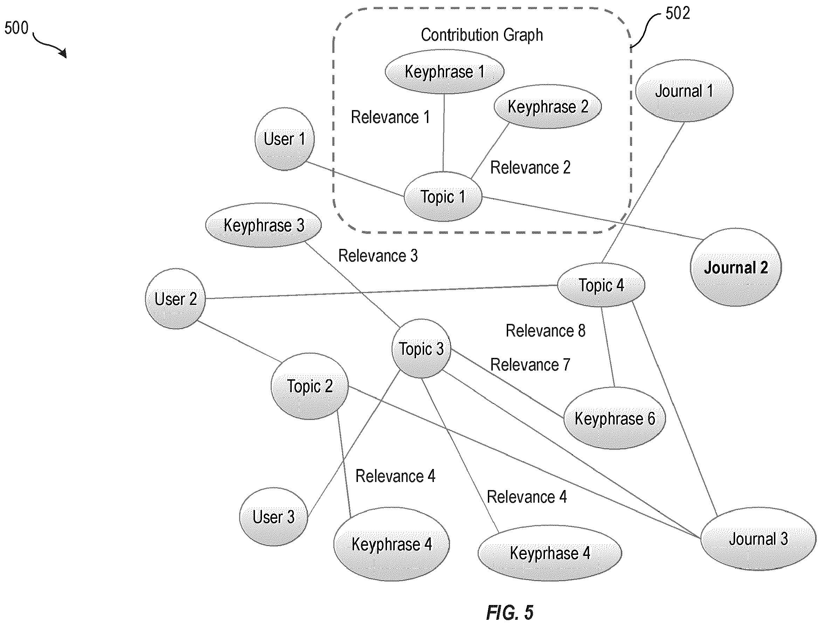

In an embodiment, the entity may correspond to one of a user, a group of users who works together to achieve a common objective, or an organization. In an embodiment, the respective entity of the entity group may correspond to a researcher and the item may correspond to a research journal with which the researcher may be associated. The set of intermediate nodes may include a set of key-phrase nodes and a set of topic nodes. A relevancy weight may be assigned to an edge between each key-phrase node of the set of key-phrase nodes and a corresponding topic node of the set of topic nodes. An example of a graph and a subgraph associated with researchers and research journals is described further, for example, in FIG. 5.

It should be noted that the scenario 300 shown in FIG. 3 is presented merely as example and should not be construed to limit the scope of the disclosure.

FIG. 4 is a diagram that illustrates a flowchart of an example method for extraction of a set of subgraphs from a graph database, in accordance with an embodiment of the disclosure. FIG. 4 is described in conjunction with elements from FIG. 1, FIG. 2, and FIG. 3. With reference to FIG. 4, there is shown a flowchart 400. The method illustrated in the flowchart 400 may start at 402 and may be performed by any suitable system, apparatus, or device, such as by the example system 102 of FIG. 1 or the processor 202 of FIG. 2. Although illustrated with discrete blocks, the steps and operations associated with one or more of the blocks of the flowchart 400 may be divided into additional blocks, combined into fewer blocks, or eliminated, depending on the particular implementation.

At 402, a set of distinct entity nodes may be determined in the graph database 104. In an embodiment, the processor 202 may be configured to determine the set of distinct entity nodes in the graph database 104. For instance, the processor 202 may query the graph database 104 to determine a set of distinct entity nodes associated with a set of distinct entities of an entity group. The set of distinct entity nodes may be determined from the graph 108 stored in the graph database 104. The determination of the set of distinct entity nodes is described further, for example, in FIG. 6.

At 404, a set of distinct item nodes may be determined in the graph database 104. In an embodiment, the processor 202 may be configured to determine the set of distinct item nodes in the graph database 104. Specifically, the processor 202 may query the graph database 104 to determine the set of distinct items nodes. Such nodes may be associated with a set of distinct items and may be identified from the graph 108 stored in the graph database 104. The determination of the set of distinct item nodes is described further, for example, in FIG. 6.

At 406, for each pair of an entity node (e.g., the first entity node 302, for the entity "e1") of the set of distinct entity nodes and an item node (e.g., the first item node 304, for the item "i2") of the set of distinct item nodes, a set of operations may be performed. The set of operations may include a first operation (406A) and a second operation (406B). In an embodiment, the processor 202 may be configured to perform the set of operations for each pair of an entity node of the set of distinct entity nodes and an item node of the set of distinct item nodes.

At 406A, the first operation may be performed. 202. The first operation may include extraction of a first subgraph of a plurality of subgraphs from the graph 108 stored in the graph database 104. In an embodiment, information in the extracted first subgraph may include a set of intermediate nodes connected to an entity node and an item node through a set of edges. Each intermediate node of the et of intermediate nodes may represent an attribute that may be linked to the item. For example, the information may include the first set of intermediate nodes (e.g., the first node 306A, the second node 306B, and the third node 306C) and a set of edges including a first edge between the first node 306A and the third node 306C, and a second edge between the second node 306B and the third node 306C.

At 406B, the second operation may be performed. The second operation may include a trimming of one or more intermediate nodes from the set of intermediate nodes, based on a relevancy attribute that may be assigned to each edge of the set of edges. The trimming of the one or more intermediate nodes may executed to remove nodes associated with attributes that may not be of much relevance to the item associated with the item node. The first operation and the second operation are described further, for example, in FIG. 6.

At 408, the set of subgraphs 112 may be extracted from the plurality of subgraphs by removing one or more duplicate subgraphs from the plurality of subgraphs. In an embodiment, the processor 202 may be configured to extract the set of subgraphs 112 from the plurality of subgraphs by removing the one or more duplicate subgraphs from the plurality of subgraphs. The removal of the one or more duplicate subgraphs may be executed to avoid a data duplicity bias that may be introduced in a training dataset (described in FIG. 6) to be generated from the set of subgraphs. The extraction of the set of subgraphs 112 is described further, for example, in FIG. 6. Control may pass to end.

Although the flowchart 400 is illustrated as discrete operations, such as 402, 404, 406 (including 406A and 406B), and 408. However, in certain embodiments, such discrete operations may be further divided into additional operations, combined into fewer operations, or eliminated, depending on the particular implementation without detracting from the essence of the disclosed embodiments.

FIG. 5 is a diagram that illustrates an exemplary graph in which each entity corresponds to a researcher and each item corresponds to a research journal associated with a respective researcher, in accordance with an embodiment of the disclosure. FIG. 5 is described in conjunction with elements from FIG. 1, FIG. 2, FIG. 3, and FIG. 4. With reference to FIG. 5, there is shown an exemplary graph 500. The graph 500 may be stored in the graph database 104 and may be referred to as a knowledge graph. The graph 500 includes three entity nodes, each of which may correspond to a researcher. For example, a first entity node corresponds to a first researcher (e.g., "User 1"), a second entity node corresponds to a second researcher (e.g., "User 2"), and a third entity node corresponds to a third researcher (e.g., "User 3"). The graph 500 further includes three item nodes, each of which may correspond to a research journal associated with one or more researchers. As an example, the graph 500 includes a first item node corresponding to a first research journal (e.g., "Journal 1"), a second item node corresponding to a second research journal (e.g., "Journal 2"), and a third item node corresponding to a third research journal (e.g., "Journal 3").

The graph 500 further includes a set of intermediate nodes that may include a set of key-phrase nodes and a set of topic nodes. Each topic node of the set of topic nodes may be associated with at least one entity node (representing a researcher) and at least one item node (representing a research journal associated with the researcher). Each topic node may represent a topic associated with one or more research journals. For example, the topic associated with a research journal may be include information such as, but not limited to, a topic or subtopic of research, an application domain, a problem being solved in an application domain, or a solution to a problem in an application domain. Each key-phrase node of the set of key-phrase nodes may be associated with one or more topic nodes and may represent a key-phrase (i.e. a phrase or set of words) that may be used to index research papers associated with a certain research journal. The key-phrase nodes may also be used to search for research papers associated with a certain research journal. In an embodiment, a relevancy weight may be assigned to an edge between each key-phrase node of the set of key-phrase nodes and a corresponding topic node of the set of topic nodes. The relevancy weight assigned to the edge may indicate a degree of relevancy of a key-phrase associated with the key-phrase node with respect to a topic associated with the corresponding topic node.

For example, a set of intermediate nodes may lie between the first entity node (representing the first researcher, e.g., "User 1") and the second item node (representing the second research journal, e.g., "Journal 2"). The set of intermediate nodes may include a first topic node (representing a first topic, e.g., "Topic 1"), a first key-phrase node (representing a first key-phrase, e.g., "Keyphrase 1"), and a second key-phrase node (representing a second key-phrase, e.g., "Keyphrase 2"). Also, a first relevancy weight (e.g., "Relevance 1") may be assigned to an edge between the first topic node and the first key-phrase node. Further, a second relevancy weight (e.g., "Relevance 2") may be assigned to an edge between the first topic node and the second key-phrase node. Herein, the first topic, the first key-phrase, and the second key-phrase may be attributes of the second research journal.

In an embodiment, the processor 202 may extract a subgraph 502 from the graph 500. The extracted subgraph 502 may include a set of intermediate nodes (such as the first topic node, the first key-phrase node, and the second key-phrase node). The extracted subgraph 502 may be referred as a contribution graph of the first researcher (e.g., "User 1") for the first research journal (e.g., "Journal 1"). The extraction of a subgraph is described further, for example, in FIG. 6.

It should be noted that the graph 500 shown in FIG. 5 is presented merely as example and should not be construed as limiting the scope of the disclosure.

FIG. 6 is a diagram that illustrates exemplary operations for extraction of a set of subgraphs from a graph database, in accordance with an embodiment of the disclosure. FIG. 6 is explained in conjunction with elements from FIG. 1, FIG. 2, FIG. 3, FIG. 4, and FIG. 5. With reference to FIG. 6, there is shown a block diagram 600 that illustrates exemplary operations of an execution pipeline of operations from 602 to 606 for extraction of the set of subgraphs 112. Each of the set of subgraphs 112 may be associated with a certain entity (e.g., a researcher) from the graph database 104. The exemplary operations may be executed by any computing system, for example, by the system 102 of FIG. 1 or by the processor 202 of FIG. 2.

At 602, a query and extraction operation may be executed. In the query and extraction operation, the processor 202 may query the graph database 104 storing a knowledge graph (such as a graph 608) to extract a plurality of subgraphs, each of which may be associated with a certain entity (such as a researcher). Each subgraph of the set of subgraphs 112 may include information associating a respective entity (e.g., a researcher) of an entity group with an item (such as a research journal). In the graph 608 of FIG. 6, "u1", "u2", and "u3" may represent entity nodes for researchers; "j1", "j2", and "j3" may represent item nodes for research journals; "t" may represent a topic node; and "k" may represent a key-phrase node.

For example, based on the query of the graph database 104, the processor 202 may determine a matrix 610, which may be associated with information included in the plurality of subgraphs. The determined matrix 610 may be referred to as a contribution graph matrix. Each element of the matrix 610 may include information associated with a subgraph between an entity node (e.g., a node representing a researcher, "uᵢ") and an item node (e.g., a node representing a research journal, "jᵢ") in the graph 608. As shown, an element "u1, j2" may include information of a subgraph 612A (e.g., "g1") between the researcher "u1" and the research journal "j2". Similarly, an element "u2, j1" may include information of a subgraph 612B (e.g., "g2") between the researcher "u2" and the research journal "j1", while an element "u2, j3" may include information of a subgraph 612C (e.g., "g3") between the researcher "u2" and the research journal "j3". Further, as shown, elements "u1, j1" and "u2, j2" may be empty or may include a "Not Applicable (n/a)" entry, which may indicate that there may be no subgraph between the researcher "u1" and the research journal "j1", or between the researcher "u2" and the research journal "j2".

At 604, a trim operation may be executed. In an embodiment, the processor 202 may be configured to execute the trim operation on one or more intermediate nodes of each extracted subgraph. The trim operation may be executed based on a relevancy attribute assigned to each edge of a set of edges between adjacent intermediate nodes of the graph 608. For example, the trim operation may be executed on the subgraph 612C (e.g., "g3"). Based on a relevancy attribute assigned to an edge between a first key-phrase node and a first topic node in the subgraph 612C, the processor 202 may trim the first key-phrase node from the subgraph 612C. The trimming may be performed based on a determination that the relevancy attribute is below a certain threshold (e.g., 30%). Based on the execution of the trimming operation on the subgraph 612C, a subgraph 614 may be determined. The subgraph 614 may be referred to as a contribution graph associated with the researcher "u2" for the research journal "j3". The processor 202 may update the information associated with each subgraph in the matrix 610 based on the execution of the trimming operation on the respective subgraph.

At 606, a pruning operation may be executed. In an embodiment, the processor 202 may be configured to execute the pruning operation on each contribution graph (determined based on the trim operation at 604). For example, information of a set of contribution graphs, which may be associated with the researcher "u2" may be obtained based on a column 610A of the matrix 610. The processor 202 may delete duplicate contribution graphs based on the information associated with the set of contribution subgraphs. The duplicity may be determined based at least on a subgraph structure and relevancy weights. In case of duplicate contribution graphs, the processor 202 may store, in the memory 204, one copy of the contribution graph along with an identity of each research journal for which the duplicate contribution graphs have been identified. Based on the execution of the pruning operation of the set of contribution graphs associated with the researcher "u2", a pruned set of contribution graphs 616 may be determined.

In an embodiment, the pruned set of contribution graphs 616 may be stored in the memory 204 as a list along with identities of each research journal corresponding to respective contribution graphs of the pruned set of contribution graphs 616. For example, the pruned set of contribution graphs 616 may include a contribution graph "cg2" for the research journal "j1", a contribution graph "cg3" for the research journal "j3", ...and a contribution graph for the research journals "jx" and "jy".

It should be noted that the block diagram 600 shown in FIG. 6 is presented merely as example and should not be construed as limiting the scope of the disclosure.

FIG. 7 is a diagram that illustrates a flowchart of an example method for determination of recommendations using graph machine learning-based regression, in accordance with an embodiment of the disclosure. FIG. 7 is described in conjunction with elements from FIG. 1, FIG. 2, FIG. 3, FIG. 4, FIG. 5, and FIG. 6. With reference to FIG. 7, there is shown a flowchart 700. The method illustrated in the flowchart 700 may start at 702 and may be performed by any suitable system, apparatus, or device, such as by the example system 102 of FIG. 1 or the processor 202 of FIG. 2. Although illustrated with discrete blocks, the steps and operations associated with one or more of the blocks of the flowchart 700 may be divided into additional blocks, combined into fewer blocks, or eliminated, depending on the particular implementation.

At 702, the graph database 104 may be queried to extract the set of subgraphs 112. Each of the set of subgraphs 112 may include information that may associate a respective entity of the entity group with a corresponding item. In an embodiment, the processor 202 may be configured to query the graph database 104 to extract the set of subgraphs 112 from a knowledge graph (such as the graph 108) stored in the graph database 104. Details related to the query and the extraction of the set of subgraphs 112 are provided further, for example, in FIGs. 4 and 6.

At 704, a label score may be computed for each subgraph of the set of subgraphs 112. The label score may be indicative of an importance of an item to a respective entity. In an embodiment, the processor 202 may be configured to compute the label score for each subgraph of the set of subgraphs 112. In an embodiment, the label score associated with a first subgraph of the set of subgraphs 112 may be computed based on at least one of a first score, a second score, a third score, or a fourth score. The first subgraph may be associated with a third entity, which may be different from the first entity and the second entity.

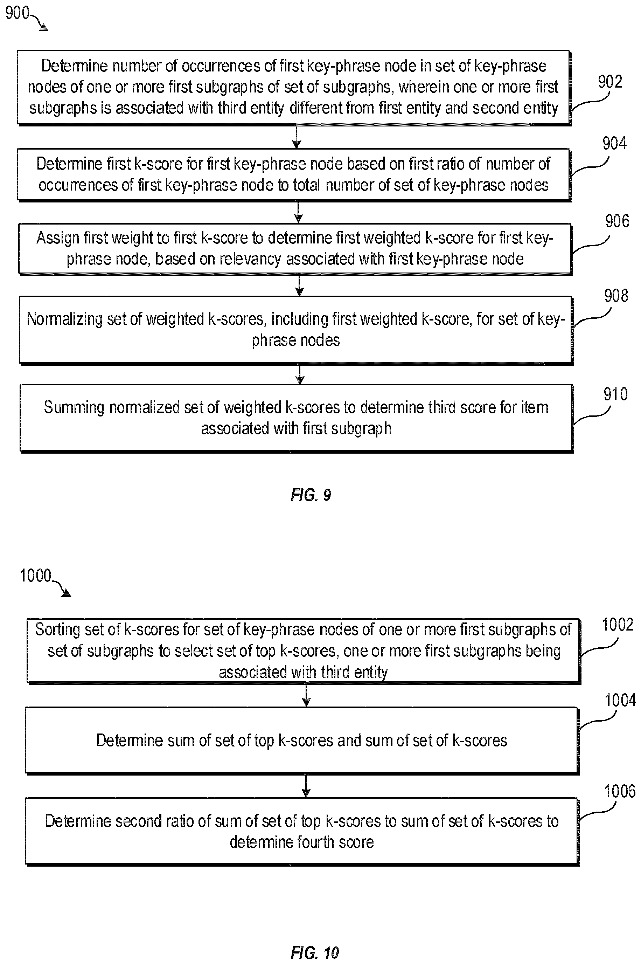

The first score may include a sum of nodes and edges of the first subgraph. For example, with reference to FIG. 5, for the subgraph 502, the first score may be equal to 5 (i.e., 3 nodes + 2 edges). The first score may be referred as a graph size. The second score may include an edge-to-node ratio for the first subgraph. For example, for the subgraph 502, the second score may be equal to '2/3' as the subgraph graph 308 may include 2 edges and 3 nodes. The second score may also be referred as a graph density. Further, the third score may include a relevancy-based key-phrase score for an item associated with the first subgraph. The third score may be referred to as a total k-score. The fourth score may include a relative key-phrase score for the item associated with the first subgraph. The fourth score may be referred to as a top k-score percentage. The determination of the third score and the fourth score are described further, for example, in FIG. 9 and FIG. 10, respectively.

In an embodiment, the first score and the third score may be absolute scores. Whereas the second score and the fourth score may be relative scores. While the first score and the second score may be associated with a structure of the first subgraph, the third score and the fourth score may be associated with key-phrases associated with the first subgraph. For example, in cases where the entity is a researcher and the item is a research journal, a large value of the first score may indicate that a research journal has a large number of topics and key-phrases. The large value of the first score may indicate that a contribution graph of the researcher and the corresponding research journal may be large. Further, a large value of the second score may indicate that topics associated with a research journal have a high degree of similarity. The large value of the second score may also indicate that the contribution graph corresponding to the research journal is dense. Further, a high value of the third score may indicate a high count of common key-phrases that may be of a high relevance. The high value of the third score may also indicate that a certain research journal substantially matches a researcher's interest. Further, a high value of the fourth score may indicate a high percentage of common key-phrases. The high value of the fourth score may also indicate that a certain research journal is substantially focused on a corresponding researcher's interest.

In an embodiment, the computation of the label score may include normalizing each of the first score, the second score, the third score, and the fourth score. The normalization of a score may include division of the score by a normalization parameter, such that the normalized value of the score lies between a predefined range, such as between 0 to 1. For example, the processor 202 may determine a maximum score from among the first score, the second score, the third score, and the fourth score. Thereafter, the processor 202 may assign the maximum score of the four scores to the normalization parameter and may divide each of the four scores by the normalization parameter to normalize the four scores. The computation of the label score may further include summing each of the normalized first score, the normalized second score, the normalized third score, and the normalized fourth score.

At 706, a training dataset may be generated to include the set of subgraphs 112 and the label score for each subgraph. In an embodiment, the processor 202 may be configured to generate the training dataset. The generated training dataset may include each of the set of subgraphs 112 and a label score corresponding to the respective subgraph of the set of subgraphs 112.

At 708, the set of ML regression models 110 may be trained on respective entity-specific subsets of the training dataset. In an embodiment, the processor 202 may be configured to train the set of ML regression models 110 on respective entity-specific subsets of the training dataset. For example, a particular ML regression model of the set of ML regression models 110 may be associated with a particular entity of the entity group. From the training dataset, the processor 202 may determine entity-specific subsets that may be associated with (or may be specific to) the particular entity. Thereafter, the processor 202 may train the particular ML regression model based on the determined entity-specific subsets associated with the particular entity. Herein, the entity-specific subsets may include one or more subgraphs associated with the particular entity and a label score corresponding to each of the one or more subgraphs. Training of an ML regression model is well known in the art, and hence, details related to the training of the set of ML regression models 110 are omitted for the sake of brevity. Details related to the set of ML regression models 110 are provided further, for example, in FIG. 1.

At 710, an unseen subgraph associated with a first entity may be provided as an input to a trained ML regression model of the trained set of ML regression models. The trained ML regression model may be associated with a second entity different from the first entity. In an embodiment, the processor 202 may be configured to provide the unseen subgraph associated with the first entity as an input to the trained ML regression model associated with the second entity. The unseen subgraph may be a subgraph that may a new instance of a subgraph associated with the first entity and an item. The unseen subgraph that may not be a predetermined subgraph.

At 712, a prediction score may be generated as output of the trained ML regression model for the input. In an embodiment, the processor 202 may be configured to generate the prediction score. The processor 202 may apply the trained ML regression model associated with the second entity on the unseen subgraph associated with the first entity to generate the prediction score as the output. The prediction score may be indicative of an importance of items associated with the second entity for the first entity.

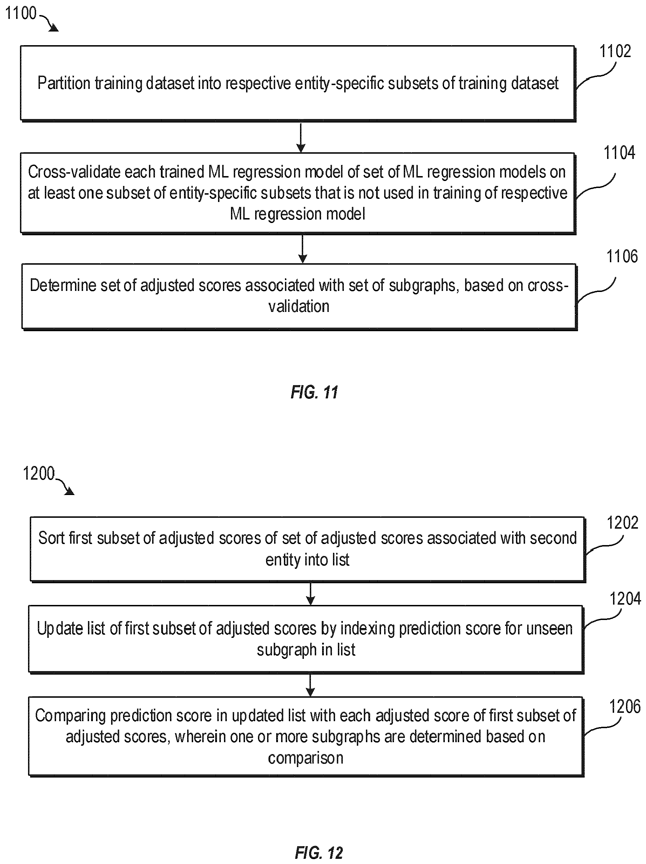

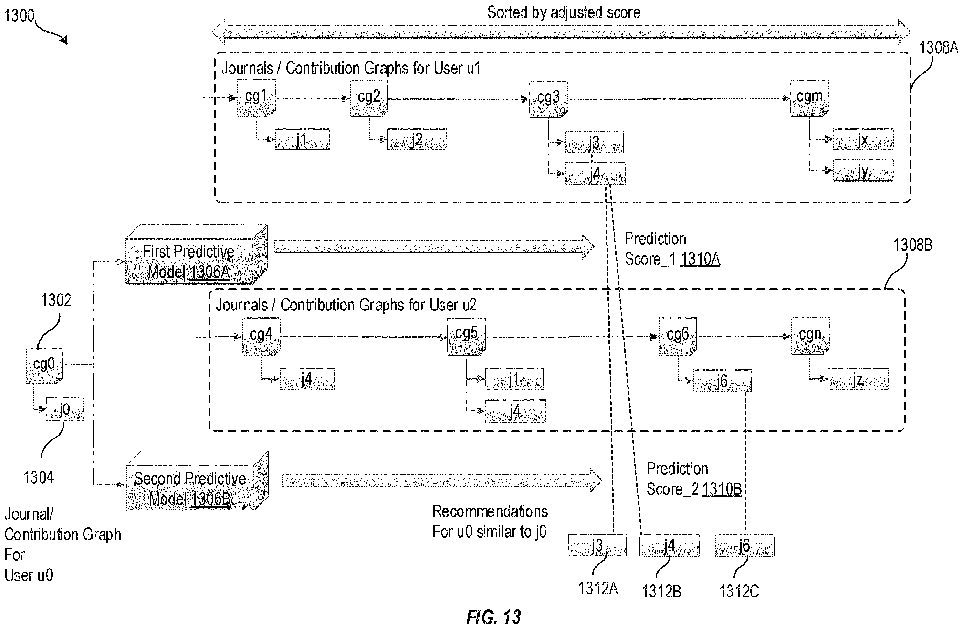

At 714, from the set of subgraphs 112, one or more subgraphs associated with the second entity may be determined. In an embodiment, the processor 202 may be configured to determine the one or more subgraphs from the set of subgraphs 112, based on the prediction score. The one or more subgraphs determined from the set of subgraphs 112 may be associated with the second entity. Further, the one or more subgraphs may be associated with one or more items related to the second entity such that the one or more items may be of importance to the first entity. The determination of the one or more subgraphs is described further, for example, in FIGs. 12 and 13.

At 716, a recommendation for one or more items may be determined, based on the one or more subgraphs. In an embodiment, the processor 202 may be configured to determine the recommendation for the one or more items, based on the one or more subgraphs. The one or more items in the recommendation may be determined based on an association of the one or more items with the one or more subgraphs. For example, a subgraph "SG₁" of the one or more subgraphs may be associated with an item "I₁". In such a case, the item "I₁" may be recommended as one of the one or more items. The determination of the recommendation for the one or more items is described further, for example, in FIG. 13.

At 718, a user device (e.g., the user device 106) associated with the first entity (e.g., the user 116) may be controlled to display the recommendation. In an embodiment, the processor 202 may be configured to control the user device associated with the first entity to display the recommendation. For example, the processor 202 may transmit the recommendation to the user device 106 and control the user device 106 to display the transmitted recommendation. Control may pass to end.

Although the flowchart 700 is illustrated as discrete operations, such as 702, 704, 706, 708, 710, 712, 714, 716, and 718. However, in certain embodiments, such discrete operations may be further divided into additional operations, combined into fewer operations, or eliminated, depending on the particular implementation without detracting from the essence of the disclosed embodiments.

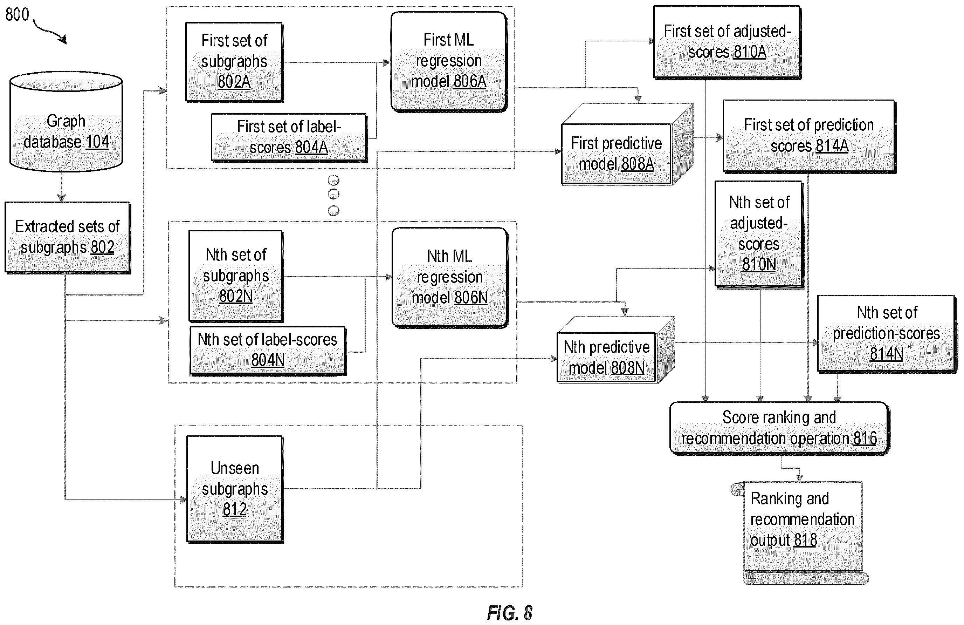

FIG. 8 is a diagram that illustrates a block diagram of an example method for determination of recommendations using graph machine learning-based regression, in accordance with an embodiment of the disclosure. FIG. 8 is described in conjunction with elements from FIG. 1, FIG. 2, FIG. 3, FIG. 4, FIG. 5, FIG. 6, and FIG. 7. With reference to FIG. 8, there is shown a block diagram 800. The block diagram 800 may include the graph database 104 and extracted sets of subgraphs 802. The extracted sets of subgraphs 802 may include a first set of subgraphs 802A, ...and an Nth set of subgraphs 802N. The block diagram 800 may further include a first set of label scores 804A, ...and an Nth set of label scores 804N. Further, the block diagram 800 may include a first ML regression model 806A, ...and an Nth ML regression model 806N, a first predictive model 808A, ...and an Nth predictive model 808N; a first set of adjusted scores 810A, ...and an Nth set of adjusted scores 810N; an unseen subgraph 812; and a first set of prediction scores 814A, ...and an Nth set of prediction scores 814N. The block diagram 800 may further include a score ranking and recommendation operation 816, which upon execution by the processor 202 may determine a ranking and recommendation output 818.

The number of regression models, predictive models, adjusted scores, and prediction scores shown in FIG. 8 are presented merely as examples and such a number should not be construed as limiting the disclosure.

In an embodiment, the processor 202 may be configured to query the graph database 104 and extract sets of subgraphs (such as the extracted sets of subgraphs 802). The first set of subgraphs 802A of the extracted sets of subgraphs 802 may be associated with an entity E₁ (for example, a researcher "u1"). Similarly, the Nth set of subgraphs 802N of the extracted sets of subgraphs 802 may be associated with an entity E_{N} (for example, a researcher "uN"). The processor 202 may be configured to determine each label score of the first set of label scores 804A for a respective subgraph of the first set of subgraphs 802A. Similarly, the Nth set of label scores 804N may be determined for a respective subgraph of the Nth set of subgraphs 802N. The determination of a label score is described further, for example, in FIG. 7, FIG. 9, and FIG. 10.

For training the first ML regression model 806A, the processor 202 may be configured to determine a training dataset. The training dataset may include the first set of subgraphs 802A and the first set of label scores 804A, each of which may correspond to a respective subgraph of the first set of subgraphs 802A. Similarly, the processor 202 may be configured to determine a training dataset for the Nth ML regression model 806N based on the Nth set of subgraphs 802N and the Nth set of label scores 804N. Herein, the first ML regression model 806A may be associated with the entity E₁ and the Nth ML regression model 806N may be associated with the entity E_{N}. Based on the training of each ML regression model, the processor 202 may be configured to determine a corresponding predictive model. For example, the processor 202 may determine the first predictive model 808A based on the training of the first ML regression model 806A and may determine the Nth predictive model 808N based on the training of the Nth ML regression model 806N. In an embodiment, the first predictive model 808A may correspond to the trained first ML regression model 806A, while the Nth predictive model 808N may correspond to the trained Nth ML regression model 806N.

In an embodiment, the processor 202 may be configured to determine a set of adjusted scores associated with each set of subgraphs of the extracted sets of subgraphs 802. The set of adjusted score associated with a set of subgraphs may be determined based on an application of a trained ML model (i.e., a predictive model), (which may be specific to an entity associated with the set of subgraphs) on at least one subset of the set of subgraphs. For example, the processor 202 may apply the first predictive model 808A on at least one subset of the first set of subgraphs 802A to determine the first set of adjusted scores 810A. The at least one subset of the first set of subgraphs 802A may be different from one or more subgraphs of the first set of subgraphs 802A that may be used for the training of the first ML regression model 806A to determine the first predictive model 808A. Further, the first set of adjusted scores 810A may correspond to cross-validation scores for the first predictive model 808A (i.e., the trained first ML regression model 806A). Similarly, the processor 202 may apply the Nth predictive model 808N on at least one subset of the Nth set of subgraphs 802N to determine the Nth set of adjusted scores 810N. The determination of the set of adjusted scores associated with the set of subgraphs is described further, for example, in FIG. 12.

In an embodiment, the processor 202 may receive the unseen subgraph 812 associated with the first entity. The unseen subgraph 812 may be retrieved from the extracted sets of subgraphs 802 or may be received from another source, for example, a web source (such as a website) that collects a user input from the user 116. For example, the website may be research journal website or an e-commerce website. The processor 202 may provide the received unseen subgraph 812 as an input to each predictive model (such as the first predictive model 808A, ...and the Nth predictive model 808N). Herein, each predictive model may correspond to a respective trained ML regression model of the set of trained ML regression models. For example, the first predictive model 808A may correspond to the trained first ML regression model 806A, ...and the Nth predictive model 808N may correspond to the trained Nth ML regression model 806N.

Based on application of a predictive model on the received unseen subgraph 812, the processor 202 may determine a set of prediction scores as an output for the input to the predictive model. For example, the processor 202 may determine an output that may include first set of prediction scores 814A based on application of the first predictive model 808A on the received unseen subgraph 812. Similarly, the processor 202 may determine an output of the Nth set of prediction scores 814N based on an application of the Nth predictive model 808N on the received unseen subgraph 812. A prediction score corresponding to a certain entity may be indicative of an importance of items associated with the particular entity for the first entity. For example, the first set of prediction scores 814A corresponding to the entity "E₁" may be indicative of an importance of items associated with the entity "E₁" for the first entity.

In an embodiment, the processor 202 may be configured to execute a score ranking and recommendation operation 816. Based on the execution of the score ranking and recommendation operation 816, a ranking and recommendation output 818 may be determined. As part of the score ranking and recommendation operation 816, the processor 202 may create a ranked list of adjusted scores (i.e., a ranking output from the ranking and recommendation output 818) from each set of adjusted scores (such as, the first set of adjusted scores 810A, ....and the Nth set of adjusted scores 810N). Further, the processor 202 may index each prediction score in the first set of prediction scores 814A, ...and the Nth set of prediction scores 814N within a corresponding ranked list of adjusted scores. The processor 202 may compare each indexed prediction score with each adjusted score in the corresponding ranked list of adjusted scores to determine one or more subgraphs. In other words, the index of each prediction score may be compared with the index of each respective adjusted score. For example, the index of each prediction score of the first set of prediction scores 814A may be compared with the index of each respective adjusted prediction score of the first set of adjusted scores 810A. Thereafter, the processor 202 may determine one or more items associated with the determined one or more subgraphs and may recommend the determined one or more items (i.e., a recommendation output from the ranking and recommendation output 818). For example, the processor 202 may determine items nodes that may be linked to intermediate nodes of the determined one or more subgraphs. Then, the processor 202 may recommend an item corresponding to each of the determined item nodes as the one or more items. The determination of the one or more subgraphs and the recommendation of the one or more items is described further, for example, in FIGs. 12 and 13.

It should be noted that the block diagram 800 shown in FIG. 8 is presented merely as example and should not be construed to limit the scope of the disclosure.

FIG. 9 is a diagram that illustrates a flowchart of an example method for determination of a third score associated with a first subgraph from a set of subgraphs extracted from a graph database, in accordance with an embodiment of the disclosure. FIG. 9 is described in conjunction with elements from FIG. 1, FIG. 2, FIG. 3, FIG. 4, FIG. 5, FIG. 6, FIG. 7, and FIG. 8. With reference to FIG. 9, there is shown a flowchart 900. The method illustrated in the flowchart 900 may start at 902 and may be performed by any suitable system, apparatus, or device, such as by the example system 102 of FIG. 1 or the processor 202 of FIG. 2. Although illustrated with discrete blocks, the steps and operations associated with one or more of the blocks of the flowchart 900 may be divided into additional blocks, combined into fewer blocks, or eliminated, depending on the particular implementation.

At 902, a number of occurrences of a first key-phrase node may be determined. The first key-phrase node may be present in a set of key-phrase nodes of one or more first subgraphs of the set of subgraphs 112. Herein, the one or more first subgraphs may be associated with a third entity, which may be different from the first entity and the second entity. For example, the first key-phrase node may represent a key-phrase "Distributed Computing" in a set of 21 key-phrase nodes. The set of 21 key-phrase nodes may include 7 instances of the first key-phrase node (i.e., the key-phrase "Distributed Computing"). In such case, the number of occurrences of the first key-phrase node may be determined as 7.

In an embodiment, from the set of subgraphs 112 extracted from the graph database 104, the processor 202 may be configured to determine the one or more first subgraphs associated with the third entity. Thereafter, the processor 202 may determine the number of occurrences of the first key-phrase node in the set of key-phrase nodes. By way of example, and not limitation, in case all contribution graphs of a researcher associated with different research journals, for a certain key-phrase node, the processor 202 may determine a number of times the key-phrase node occurs among all the contribution graphs associated with the researcher. Though the determination of the third score is described with respect to the third entity, the third score may be determined similarly on a per entity basis, based on the operations 902 to 910, as described herein.

At 904, a first k-score for the first key-phrase node may be determined, based on a first ratio of the number of occurrences of the first key-phrase to a total number of the set of key-phrase nodes. In an embodiment, the processor 202 may be configured to determine the first k-score. For example, in case of the contribution graphs of the particular researcher for different research journals, the processor 202 may determine the first k-score for a key-phrase node as the first ratio. The first ratio may be a ratio of the count of a number of times the key-phrase node occurs among all the contribution graphs to a total number of key-phrase nodes in all the contribution graphs for the researcher. As an example, a certain key-phrase node (for example, "Distributed Computing") may occur seven times in three contribution graphs of a researcher and there may be a total of 21 key-phrase node in the three contribution graphs. In such a case, the first k-score for the key-phrase node may be determined as 0.33 (i.e., 7/21).

In an embodiment, the processor 202 may store the determined first k-score in a k-score mapping table (which may be denoted by "KMT"), which may be stored in the memory 204. The first k-score of a certain key-phrase node may be obtained using a retrieval operation from the KMT (for example, KMT["Key-phrase"], where "Key-phrase" may correspond to the key-phrase string associated with the particular key-phrase node).

At 906, a first weight may be assigned to the first k-score to determine a first weighted k-score for the first key-phrase node, based on a relevancy associated with the first key-phrase node. In an embodiment, the processor 202 may be configured assign the first weight to the first k-score to determine the first weighted k-score for the first key-phrase node. The processor 202 may be configured to determine one or more relevancy weights associated with at least one edge that may connect the first key-phrase node with at least one other node of the one or more first subgraphs. For the one or more first subgraphs, the processor 202 may assign the first weight to the first k-score to determine the first weighted k-score for the first key-phrase node, based on the determined one or more relevancy weights and a predefined magnification factor. For each key-phrase node in the set of key-phrase nodes, the processor 202 may be configured to determine a weighted k-score. Based on execution of operations from 902 to 906, a set of weighted k-scores may be determined for the set of key-phrase nodes.

At 908, the set of weighted k-scores, including the first weighted k-score, may be normalized for the set of key-phrase nodes. In an embodiment, the processor 202 may be configured to normalize the set of weighted k-scores. To normalize the set of weighted k-scores, the processor 202 may convert each of the set of weighted k-scores to a real number between 0 and 1 by division of each of the set of weighted k-scores by a normalization parameter. For example, the processor 202 may determine a highest k-score value from the set of weighted k-scores and may assign the determined highest k-score value to the normalization parameter. Thereafter, the processor 202 may divide each of the set of weighted k-score by the normalization parameter to obtain a normalized set of weighted k-scores.

At 910, the normalized set of weighted k-scores may be summed to determine the third score for the item associated with the first subgraph. In an embodiment, the processor 202 may sum the normalized set of weighted k-scores to determine the third score associated with the first subgraph. Thus, the third score may correspond to a total k-score associated with the first subgraph. Similarly, based on the operations 902 to 910, the third score may be determined for each item associated with the other subgraphs of the set of subgraphs 112. Control may pass to end.

Although the flowchart 900 is illustrated as discrete operations, such as, 902, 904, 906, 908, and 910. However, in certain embodiments, such discrete operations may be further divided into additional operations, combined into fewer operations, or eliminated, depending on the particular implementation without detracting from the essence of the disclosed embodiments.

FIG. 10 is a diagram that illustrates a flowchart of an example method for determination of a fourth score associated with a first subgraph from a set of subgraphs extracted from a graph database, in accordance with an embodiment of the disclosure. FIG. 10 is described in conjunction with elements from FIG. 1, FIG. 2, FIG. 3, FIG. 4, FIG. 5, FIG. 6, FIG. 7, FIG. 8, and FIG. 9. With reference to FIG. 10, there is shown a flowchart 1000. The method illustrated in the flowchart 1000 may start at 1002 and may be performed by any suitable system, apparatus, or device, such as by the example system 102 of FIG. 1 or the processor 202 of FIG. 2. Although illustrated with discrete blocks, the steps and operations associated with one or more of the blocks of the flowchart 1000 may be divided into additional blocks, combined into fewer blocks, or eliminated, depending on the particular implementation.

At 1002, a set of k-scores for the set of key-phrase nodes of the one or more first subgraphs of the set of subgraphs 112 may be sorted to select a set of top k-scores. Herein, the one or more first subgraphs may be associated with the third entity. In an embodiment, the processor 202 may be configured to sort the set of k-scores to select the set of top k-scores. The determination of the set of k-scores for the set of key-phrase nodes is described further, for example, in FIG. 9. For example, the set of k-scores for the set of key-phrase nodes may be sorted to select a set of top 10% k-scores of the set of k-scores. Though the determination of the fourth score is described with respect to the third entity, the fourth score may be determined similarly on a per entity basis, based on the operations 1002 to 1006, as described herein.

At 1004, a sum of the set of top k-scores and a sum of the set of k-scores may be determined. In an embodiment, the processor 202 may be configured to determine the sum of the set of top k-scores and the sum of the set of k-scores for the set of key-phrase nodes of the one or more first subgraphs. For example, a sum of the set of top 10% k-scores and a sum of all of the k-scores may be determined.

At 1006, a second ratio of the sum of top k-scores to the sum of the set of k-scores may be determined to determine the fourth score associated with the first subgraph. In an embodiment, the processor 202 may be configured to determine the second ratio of the sum of top k-scores to the sum of the set of k-scores so as to determine the fourth score associated with the first subgraph. For example, the fourth score may be determined as a ratio of the sum of top 10% k-scores to the sum of all the k-scores from the set of k-scores. Control may pass to end.

Although the flowchart 1000 is illustrated as discrete operations, such as 1002, 1004, and 1006. However, in certain embodiments, such discrete operations may be further divided into additional operations, combined into fewer operations, or eliminated, depending on the particular implementation without detracting from the essence of the disclosed embodiments.

FIG. 11 is a diagram that illustrates a flowchart of an example method for determination of a set of adjusted scores associated with a set of subgraphs extracted from a graph database, in accordance with an embodiment of the disclosure. FIG. 11 is described in conjunction with elements from FIG. 1, FIG. 2, FIG. 3, FIG. 4, FIG. 5, FIG. 6, FIG. 7, FIG. 8, FIG. 9, and FIG. 10. With reference to FIG. 11, there is shown a flowchart 1100. The method illustrated in the flowchart 1100 may start at 1102 and may be performed by any suitable system, apparatus, or device, such as by the example system 102 of FIG. 1 or the processor 202 of FIG. 2. Although illustrated with discrete blocks, the steps and operations associated with one or more of the blocks of the flowchart 1100 may be divided into additional blocks, combined into fewer blocks, or eliminated, depending on the particular implementation.

At 1102, the training dataset may be partitioned into entity-specific subsets of the training dataset. In an embodiment, the processor 202 may be configured to partition the training dataset into the entity-specific subsets of the training dataset. For example, the training dataset may be partitioned into a first subset associated with an entity "E₁", a second subset associated with an entity "E₂", ...and an Nth subset associated with an entity "E_{N}". The first subset may include a first set of subgraphs associated with the entity "E₁" and a first set of label scores associated with the first set of subgraphs. Further, the second subset may include a second set of subgraphs associated with the entity "E₂" and a second set of label scores associated with the second set of subgraphs. Similarly, the Nth subset may include an Nth set of subgraphs associated with the entity "E_{N}" and an Nth set of label scores associated with the Nth set of subgraphs.

At 1104, each training ML regression model of the set of ML regression models 110 may be cross-validated on at least one subset of the entity-specific subsets, not used in training of a respective ML regression model. In an embodiment, the processor 202 may be configured to cross-validate each training ML regression model of the set of ML regression models 110.

For example, with reference to FIG. 8, the first ML regression model 806A may be associated with an entity "E₁". The partitioned entity-specific subset associated with the entity "E₁" may include the first set of subgraphs 802A and the first set of label scores 804A. The first ML regression model 806A may also be associated with the entity "E₁". A first subset of subgraphs of the first set of subgraphs 802A and a respective first subset of label scores of the first set of label scores 804A may be used for the training of the first ML regression model 806A. The processor 202 may determine at least one subset of the entity-specific subsets that are not used in the training of the first ML regression model 806A. For example, such a subset may be associated with another entity, such as, the entity "E_{N}".

For example, the determined at least one subset may include a second subset of subgraphs of the Nth set of subgraphs 802N and a respective second subset of label scores of the Nth set of label score 804N. The processor 202 may cross-validate the first ML regression model 806A based on the determined subsets of the training dataset. Such subsets may be remaining partitions of the training dataset that are not used in the training of the first ML regression model 806A. Thus, for the cross-validation, the second subset of subgraphs and a respective second subset of label scores may be used to infer against the first ML regression model 806A trained based on the first subset of subgraphs and the respective first subset of label scores.

At 1106, a set of adjusted scores associated with the set of subgraphs 112 may be determined, based on the cross-validation. In an embodiment, the processor 202 may be configured to determine the set of adjusted scores associated with the set of subgraphs 112, based on the cross-validation. For example, with reference to FIG. 8, the processor 202 may feed the first set of subgraphs 802A to the first predictive model 808A (i.e., the trained first ML regression model 806A) to determine a set of initial scores associated with the first set of subgraphs 802A. The trained first ML regression model 806A may be cross-validated, as described at 1104. Based on the cross-validation, a trained ML regression model (e.g., the first predictive model 808A) may produce an adjusted score for each of the first set of subgraphs 802A. Control may pass to end.

Although the flowchart 1100 is illustrated as discrete operations, such as 1102, 1104, and 1106. However, in certain embodiments, such discrete operations may be further divided into additional operations, combined into fewer operations, or eliminated, depending on the particular implementation without detracting from the essence of the disclosed embodiments.

FIG. 12 is a diagram that illustrates a flowchart of an example method for determination of a recommendation of one or more items corresponding to an unseen subgraph associated with a first entity, in accordance with an embodiment of the disclosure. FIG. 12 is described in conjunction with elements from FIG. 1, FIG. 2, FIG. 3, FIG. 4, FIG. 5, FIG. 6, FIG. 7, FIG. 8, FIG. 9, FIG. 10, and FIG. 11. With reference to FIG. 12, there is shown a flowchart 1200. The method illustrated in the flowchart 1200 may start at 1202 and may be performed by any suitable system, apparatus, or device, such as by the example system 102 of FIG. 1 or the processor 202 of FIG. 2. Although illustrated with discrete blocks, the steps and operations associated with one or more of the blocks of the flowchart 1200 may be divided into additional blocks, combined into fewer blocks, or eliminated, depending on the particular implementation.

At 1202, a first subset of adjusted scores of the set of adjusted scores associated with the second entity may be sorted into a list. In an embodiment, the processor 202 may be configured to sort the first subset of adjusted scores into the list. As an example, the first subset of adjusted scores (with reference to FIG. 8) may include scores (e.g., the Nth set of adjusted scores 810N) that may be associated with a second entity-specific set of subgraphs (e.g., the Nth set of subgraphs 802N associated with a second entity, e.g., the entity "E_{N}"). In an embodiment, the set of adjusted scores associated with the second entity may be sorted in an ascending order of values.

At 1204, the list including the first subset of adjusted scores may be updated by indexing the prediction score for the unseen subgraph (e.g., the unseen subgraph 812) in the list. In an embodiment, the processor 202 may be configured to update the list of the first subset of adjusted scores by indexing the prediction score for the unseen subgraph 812 in the list. For example, an index of a value of the prediction score for the unseen subgraph 812 may be determined for the list of the first subset of adjusted scores. Any known indexing technique may be used to index the value of the prediction score in the list. For example, the list may be implemented as an array or a linked list data structure and the index may be implemented as a pointer or reference variable. The sorted list of the first subset of adjusted scores may be traversed in a loop to index the prediction score of the unseen subgraph. Thereafter, the list of the first subset of adjusted scores may be updated based on the indexed value of the prediction score in the list. Once the sorted list of the first subset of adjusted scores may be traversed, indexed, and updated, the operation 1206 maybe executed.

At 1206, the prediction score may be compared with each adjusted score of the first subset of adjusted scores. Herein, the one or more subgraphs may be determined, based on the comparison. In an embodiment, the processor 202 may be configured to compare the prediction score (e.g., the first set of prediction scores 814A based on the first prediction model 808A) for the unseen graph (e.g., the unseen subgraph 812) with each adjusted score (e.g., the first set of adjusted scores 810A) of the first subset. For example, based on the indexing of the prediction score, the processor 202 may determine an index associated with the prediction score in the list. As the list is already sorted, each position in the sorted list may correspond to a certain index value. Thus, the index associated with the prediction score may correspond to an index of an adjusted score, in case a position of the adjusted score in the sorted list corresponds to the index value of the prediction score. In some cases, a value of such an adjusted score may be same as the prediction score. In certain cases, a difference between such adjusted score and the prediction score may be within a defined range. Based on the comparison of the prediction score with each adjusted score of the first subset of adjusted scores, the processor 202 may determine one or more subgraphs. The processor 204 may determine one or more items, that may be associated with the determined one or more subgraphs, as a recommendation corresponding to the unseen subgraph (e.g., the unseen subgraph 812). The determination of the one or more subgraphs is described further, for example, in FIG. 13. Control may pass to end.

Although the flowchart 1200 is illustrated as discrete operations, such as 1202, 1204, and 1206. However, in certain embodiments, such discrete operations may be further divided into additional operations, combined into fewer operations, or eliminated, depending on the particular implementation without detracting from the essence of the disclosed embodiments.

FIG. 13 is a diagram that illustrates a block diagram of an example scenario for determination of recommendations associated with an entity of an unseen graph by using graph machine learning-based regression, in accordance with an embodiment of the disclosure. FIG. 13 is described in conjunction with elements from FIG. 1, FIG. 2, FIG. 3, FIG. 4, FIG. 5, FIG. 6, FIG. 7, FIG. 8, FIG. 9, FIG. 10, FIG. 11, and FIG. 12. With reference to FIG. 13, there is shown an example scenario 1300. The scenario 1300 may include an unseen subgraph 1302 associated with an item 1304, a first predictive model 1306A, a second predictive model 1306B, a first sorted list 1308A associated with a first subset of adjusted scores, a second sorted list 1308B associated with a second subset of adjusted scores, a prediction score_1 1310A, a prediction score_2 1310B. The scenario 1300 may further include one or more recommended items, including an item 1312A, an item 1312B, and an item 1312C.

The processor 202 may receive the unseen subgraph 1302. In an example, the unseen subgraph 1302 may be a contribution graph associated with a researcher "u0" and a research journal "j0". The processor 202 may feed the received unseen subgraph 1302 to each of the first predictive model 1306A and the second predictive model 1306B. The first predictive model 1306A may correspond to a trained first ML regression model (e.g., the trained first ML regression model 806A) and the second predictive model 1306B may correspond to a trained second ML regression model (e.g., the trained Nth ML regression model 806N).

The processor 202 may determine the first sorted list 1308A of adjusted scores corresponding to a first subset of subgraphs (e.g., the first set of subgraphs 802A) and may determine the second sorted list 1308B of adjusted scores corresponding to a second subset of subgraphs (e.g., the Nth set of subgraphs 802N). The determination of the adjusted scores is described further, for example, in FIG. 11.

In an example, the first subset of subgraphs may be associated with a researcher "u1" and the second subset of subgraphs may be associated with a researcher "u2". As shown in FIG. 13, the first sorted list 1308A may include a contribution graph "cg1" associated with a research journal "j1", a contribution graph "cg2" associated with a research journal "j2", a contribution graph "cg3" associated with research journals "j3" and "j4", and a contribution graph "cgm" associated with research journals "jx" and "jy". Further, the second sorted list 1308B may include a contribution graph "cg4" associated with a research journal "j4", a contribution graph "cg5" associated with research journals "j1" and "j4", a contribution graph "cg6" associated with a research journal "j6", and a contribution graph "cgn" associated with a research journal "jz".

The processor 202 may feed the unseen subgraph 1302 to each of the first predictive model 1306A and the second predictive model 1306B to determine the prediction score_1 1310A and the prediction score_2 1310B, respectively. The processor 202 may index the prediction score_1 1310A in the first sorted list 1308A and may index the prediction score_2 1310B in the second sorted list 1308B, as described further, for example, in FIG. 12. In an example, the index of the prediction score_1 1310A in the first sorted list 1308A and the index of the prediction score_2 1310B may be three (3). The processor 202 may determine the contribution graphs at the third position in each of the first sorted list 1308A and the second sorted list 1308B as the one or more subgraphs. For example, as shown, the contribution graphs "cg3" and "cg6" from the first sorted list 1308A and the second sorted list 1308B, respectively, may be determined as the one or more subgraphs. The processor 202 may then determine the one or more recommended items including the item 1312A (i.e., the research journal "j3"), the item 1312B (i.e., the research journal "j4"), and the item 1312A (i.e., the research journal "j6"), based on the determined one or more subgraphs "cg3" and "cg6". The items 1312A and 1312B may be associated with the subgraph "cg3" and the item 1312C may be associated with the subgraph "cg6".

It should be noted that the scenario 1300 of FIG. 13 is presented merely as an example and should not be construed to limit the scope of the disclosure.

Though the disclosure is described using an example of a researcher and a research journal as an entity and an item, respectively, the scope of the disclosure may not be so limited. The disclosure may be applicable to various other application domains and implementations without departure from the scope of the disclosure. In an embodiment, the disclosure may be applicable to various other domains, such as, but not limited to, patent search, retail product search, social networking, and other commercial applications. For example, the disclosure may be applicable for patent prior art search between authors and patents with assignees, citations, field, and related art as linkage information. In case of retail product search, the disclosure may be applicable for product recommendation between customers and products, with reviews, search terms, price, and purchase history as linkage information. In case of social networking, the disclosure may be applicable to friend recommendation between users and other users, with interests, locale, and friends as linkage information. Further, the disclosure may be used in commercial applications for sales lead generations between salespersons and customers, with purchase history, other businesses, and products as linkage information.

The disclosed system 102 may train the set of ML regression models 110 on the respective entity-specific subsets of the training dataset including the set of subgraphs 112 and the label score for each subgraph extracted from the graph database 104. On an input of an unseen subgraph associated with the first entity to the ML regression model associated with the second entity, a prediction score may be generated. The generated prediction score may be used to determine one or more subgraphs associated with the second entity, from the set of subgraphs. Finally, a recommendation for one or more items may be determined, based on the one or more subgraphs. In contrast to conventional systems, the disclosed system 102 (i.e., a subgraph based learning system) may capture full subgraph linkage information of intermediate nodes between nodes representative of entities and nodes representative of items, and use such subgraph linkage information for recommendation of the one or more items associated with the input unseen graph. Further, the disclosed system 102 (i.e., the subgraph based learning system) may incorporate more information into the recommendation generation process than conventional node-based learning systems. For example, unforeseen relations and patterns in the subgraph linkage information may be learned based on the disclosed subgraph-based learning system. The conventional systems, on the other hand, may use a priori knowledge of the graph data or other heuristics that may be insufficient, biased or, inaccurate. Further, the disclosed system 102 may provide better performance and may be more scalable than traditional graph-based solutions (such as, typical content-based or collaborative-filtering recommendation systems), as the disclosed system 102 may avoid inefficiencies related to global update of similarity scores into the graph database 104, which may be required in the traditional solutions.

Various embodiments of the disclosure may provide one or more non-transitory computer-readable storage media configured to store instructions that, in response to being executed, cause a system (such as, the example system 102) to perform operations. The operations may include querying a graph database to extract a set of subgraphs, each of which may include information associating a respective entity of an entity group with an item. The operations may further include computing a label score for each subgraph of the set of subgraphs. The label score may be indicative of an importance of the item to the respective entity. The operations may further include generating a training dataset to include the set of subgraphs and the label score for each subgraph of the set of subgraphs. The operations may further include training a set of machine learning (ML) regression models on respective entity-specific subsets of the training dataset. The operations may further include providing an unseen subgraph associated with a first entity as an input to an ML regression model of the trained set of ML regression models. The trained ML regression model may be associated with a second entity different from the first entity. The operations may further include generating a prediction score as an output of the ML regression model for the input. The operations may further include determining, from the set of subgraphs, one or more subgraphs associated with the second entity, based on the prediction score. The operations may further include determining a recommendation for one or more items, based on the one or more subgraphs. The operations may further include controlling a user device associated with the first entity to display the recommendation.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

1. A method, executed by a processor, comprising:
querying a graph database to extract a set of subgraphs, each of which includes information associating a respective entity of an entity group with an item;
computing a label score for each subgraph of the set of subgraphs, the label score being indicative of an importance of the item to the respective entity;
generating a training dataset to include the set of subgraphs and the label score for each subgraph of the set of subgraphs;
training a set of machine learning (ML) regression models on respective entity-specific subsets of the training dataset;
providing an unseen subgraph associated with a first entity as an input to a trained ML regression model of the trained set of ML regression models, the trained ML regression model being associated with a second entity different from the first entity;
generating a prediction score as an output of the trained ML regression model for the input;
determining, from the set of subgraphs, one or more subgraphs associated with the second entity, based on the prediction score;
determining a recommendation for one or more items, based on the one or more subgraphs; and
controlling a user device associated with the first entity to display the recommendation.

2. The method according to claim 1, wherein the entity corresponds to one of a user, a group of users who works together to achieve a common objective, or an organization.

3. The method according to claim 1, wherein the graph database includes a knowledge graph which comprises of:
a set of distinct entity nodes associated with the entity group,
a set of distinct item nodes corresponding to a set of items, and
the set of subgraphs, each of which lies between at least one entity node of the set of distinct entity nodes and at least one item node of the set of distinct item nodes.

4. The method according to claim 1, wherein each ML regression model of the set of ML regression models is a graph ML model.

5. The method according to claim 1, wherein the information in each subgraph of the set of subgraphs comprises of a set of intermediate nodes connected to an entity node and an item node through a set of edges, and
wherein each intermediate node of the set of intermediate nodes represents an attribute that is linked to the item.

6. The method according to claim 5, wherein the respective entity of the entity group corresponds to a researcher and the item corresponds to a research journal with which the researcher is associated, and
wherein the set of intermediate nodes include a set of key-phrase nodes and a set of topic nodes.

7. The method according to claim 6, wherein a relevancy weight is assigned to an edge between each key-phrase node of the set of key-phrase nodes and a corresponding topic node of the set of topic nodes.

8. The method according to claim 1, wherein the querying the graph database comprises:
determining a set of distinct entity nodes in the graph database;
determining a set of distinct item nodes in the graph database;
performing, for each pair of an entity node of the set of distinct entity nodes and an item node of the set of distinct item nodes, a set of operations that includes:
a first operation to extract a first subgraph of a plurality of subgraphs,
wherein the information in the extracted first subgraph includes:
a set of intermediate nodes, and
a set of edges, each connecting a pair of intermediate nodes of the set of intermediate nodes; and
a second operation to trim one or more intermediate nodes from the set of intermediate nodes, based on a relevancy attribute assigned to each edge of the set of edges; and
extract the set of subgraphs from the plurality of subgraphs by removing one or more duplicate subgraphs from the plurality of subgraphs.

9. The method according to claim 1, wherein the label score associated with a first subgraph, associated with a third entity different from the first entity and the second entity, from the set of subgraphs is computed based on at least one of:
a first score that includes a sum of nodes and edges of the first subgraph;
a second score that includes an edge-to-node ratio for the first subgraph;
a third score that includes a relevancy-based key-phrase score for an item associated with the first subgraph; or
a fourth score that includes a relative key-phrase score for the item associated with the first subgraph.

10. The method according to claim 9, further comprising determining the third score by:
determining a number of occurrences of a first key-phrase node in a set of key-phrase nodes of one or more first subgraphs of the set of subgraphs, wherein the one or more first subgraphs is associated with the third entity;
determining a first k-score for the first key-phrase node based on a first ratio of the number of occurrences of the first key-phrase node to a total number of the set of key-phrase nodes;
assigning a first weight to the first k-score to determine a first weighted k-score for the first key-phrase node, based on a relevancy associated with the first key-phrase node;
normalizing a set of weighted k-scores, including the first weighted k-score for the set of key-phrase nodes; and
summing the normalized set of weighted k-scores to determine the third score for the item associated with the first subgraph.

11. The method according to claim 9, further comprising determining the fourth score by:
sorting a set of k-scores for a set of key-phrase nodes of one or more first subgraphs of the set of subgraphs to select a set of top k-scores, the one or more first subgraphs being associated with the third entity;
determining a sum of the set of top k-scores and a sum of the set of k-scores; and
determining a second ratio of the sum of the set of top k-scores to the sum of the set of k-scores to determine the fourth score.

12. The method according to claim 9, wherein the computation of the label score comprises of:
normalizing each of the first score, the second score, the third score, and the fourth score, and
summing each of the normalized first score, the normalized second score, the normalized third score, and the normalized fourth score.

13. The method according to claim 1, further comprising:
partitioning the training dataset into the respective entity-specific subsets of the training dataset;
cross-validating each trained ML regression model of the set of ML regression models on at least one subset of the entity-specific subsets that is not used in the training of the respective ML regression model; and
determining a set of adjusted scores associated with the set of subgraphs, based on the cross-validation.

14. The method according to claim 13, wherein the one or more subgraphs associated with the second entity are determined by:
sorting a first subset of adjusted scores of the set of adjusted scores associated with the second entity into a list;
updating the list of the first subset of adjusted scores by indexing the prediction score for the unseen subgraph in the list; and
comparing the prediction score in the updated list with each adjusted score of the first subset of adjusted scores,
wherein the one or more subgraphs are determined based on the comparison.

15. The method according to claim 1, wherein the one or more items in the recommendation are determined based on an association of the one or more items with the one or more subgraphs.

16. One or more non-transitory computer-readable storage media configured to store instructions that, in response to being executed, cause a system to perform operations, the operations comprising:
querying a graph database to extract a set of subgraphs, each of which includes information associating a respective entity of an entity group with an item;
computing a label score for each subgraph of the set of subgraphs, the label score being indicative of an importance of the item to the respective entity;
generating a training dataset to include the set of subgraphs and the label score for each subgraph of the set of subgraphs;
training a set of machine learning (ML) regression models on respective entity-specific subsets of the training dataset;
providing an unseen subgraph associated with a first entity as an input to a trained ML regression model of the trained set of ML regression models, the trained ML regression model being associated with a second entity different from the first entity;
generating a prediction score as an output of the trained ML regression model for the input;
determining, from the set of subgraphs, one or more subgraphs associated with the second entity, based on the prediction score;
determining a recommendation for one or more items, based on the one or more subgraphs; and
controlling a user device associated with the first entity to display the recommendation.

17. The one or more non-transitory computer-readable storage media according to claim 16, wherein the graph database includes a knowledge graph which comprises of:
a set of distinct entity nodes associated with the entity group,
a set of distinct item nodes corresponding to a set of items, and
the set of subgraphs, each of which lies between at least one entity node of the set of distinct entity nodes and at least one item node of the set of distinct item nodes.

18. The one or more non-transitory computer-readable storage media according to claim 16, wherein the querying of the graph database comprises:
determining a set of distinct entity nodes in the graph database;
determining a set of distinct item nodes in the graph database;
performing, for each pair of an entity node of the set of distinct entity nodes and an item node of the set of distinct item nodes, a set of operations that includes:
a first operation to extract a first subgraph of a plurality of subgraphs,
wherein the information in the extracted first subgraph includes:
a set of intermediate nodes, and
a set of edges, each connecting a pair of intermediate nodes of the set of intermediate nodes; and
a second operation to trim one or more intermediate nodes from the set of intermediate nodes, based on a relevancy attribute assigned to each edge of the set of edges; and
extract the set of subgraphs from the plurality of subgraphs by removing one or more duplicate subgraphs from the plurality of subgraphs.

19. The one or more non-transitory computer-readable storage media according to claim 16, wherein the label score associated with a first subgraph, associated with a third entity different from the first entity and the second entity, of the set of subgraphs is computed based on at least one of:
a first score that includes a sum of nodes and edges of the first subgraph;
a second score that includes an edge-to-node ratio for the first subgraph;
a third score that includes a relevancy-based key-phrase score for an item associated with the first subgraph; or
a fourth score that includes a relative key-phrase score for the item associated with the first subgraph.

20. A system, comprising:
a memory configured to store instructions; and
a processor, coupled to the memory, executes the instructions to perform a process comprising:
querying a graph database to extract a set of subgraphs, each of which includes information associating a respective entity of an entity group with an item;
computing a label score for each subgraph of the set of subgraphs, the label score being indicative of an importance of the item to the respective entity;
generating a training dataset to include the set of subgraphs and the label score for each subgraph of the set of subgraphs;
training a set of machine learning (ML) regression models on respective entity-specific subsets of the training dataset;
providing an unseen subgraph associated with a first entity as an input to a trained ML regression model of the trained set of ML regression models, the trained ML regression model being associated with a second entity different from the first entity;
generating a prediction score as an output of the trained ML regression model for the input;
determining, from the set of subgraphs, one or more subgraphs associated with the second entity, based on the prediction score; and
determining a recommendation for one or more items, based on the one or more subgraphs; and
controlling a user device associated with the first entity to display the recommendation.
